(19) Europäisches Patentamt
European Patent Office
Office européen des brevets

(11) EP 1 249 166 B1

(12) EUROPÄISCHE PATENTSCHRIFT

(45) Veröffentlichungstag und Bekanntmachung des Hinweises auf die Patenterteilung:
**17.11.2004 Patentblatt 2004/47**

(51) Int Cl.[7]: **A01N 43/90**
// (A01N43/90, 43:80)

(21) Anmeldenummer: **02005938.2**

(22) Anmeldetag: **15.03.2002**

# (54) Synergistische biozide Wirkstoffkombinationen, Tetramethylolacetylendiharnstoff und ein Isothiazoline-3-on enthaltend, und Verwendungen solcher Wirkstoffkombinationen als Konservierungsmittel

Synergistic preservative combinations of biocidal compounds comprising tetramethylol acetylendiurea and one isothiazolin-3-one

Combinaisons synergistiques de principes biocides comprenant tetramethylol acetylendiurée et une isothiazolin-3-one, et leur utilisation comme conservateurs

(84) Benannte Vertragsstaaten:
**AT BE CH CY DE DK ES FI FR GB GR IE IT LI LU MC NL PT SE TR**

(30) Priorität: **16.03.2001 DE 10112755**

(43) Veröffentlichungstag der Anmeldung:
**16.10.2002 Patentblatt 2002/42**

(73) Patentinhaber: **Bode Chemie GmbH & Co.**
**22525 Hamburg (DE)**

(72) Erfinder:
- **Anker, Willem, Dr.**
**25474 Ellerbek (DE)**
- **Arend, Björn**
**22457 Hamburg (DE)**
- **Hombeck, Marc, Dr.**
**22303 Hamburg (DE)**

(74) Vertreter: **Hansert, Reiner M.**
**c/o Beiersdorf AG,**
**Unnastrasse 48**
**20245 Hamburg (DE)**

(56) Entgegenhaltungen:
**EP-A- 0 375 367** **US-A- 4 725 611**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 249 166 B1

Printed by Jouve, 75001 PARIS (FR)

## Beschreibung

Die vorliegende Erfindung betrifft synergistische biozide Wirkstoffkombinationen, Zusammensetzungen, solche Wirkstoffkombinationen enthaltend, und Verwendungen solcher Zusammensetzungen als Konservierungsmittel zu Stoffen und Stoffgemischen, die von schädlichen Mikroorganismen befallen werden können.

Insbesondere betrifft die Erfindung die Verwendung solcher biozider Wirkstoffkombinationen als Gebindekonservierungsmittel, bevorzugt für wäßrige Dispersionen, insbesondere Polymerdispersionen und dergleichen, aber auch für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

Der Begriff "Polymerdispersion" ist eine Sammelbezeichnung für Dispersionen (Latices) von feinverteilten natürlichen und/oder synthetischen Polymeren (übliche Teilchengröße 0,05-5 mm) in üblicherweise wäßrigen, seltener nichtwäßrigen Dispersionsmitteln. Eingeschlossen sind damit Dispersionen von Polymeren wie Natur- (Kautschuklatex) und Synthesekautschuk (Syntheselatex), wie auch von Kunstharzen (Kunstharzdispersionen) und Kunststoffen (Kunststoffdispersionen) wie Polymerisaten, Polykondensaten und Polyadditionsverbindungen. Man unterscheidet Primärdispersionen, bei welchen die Polymerisation der Basis-Monomeren direkt in der flüssigen Phase erfolgt (Suspensionspolymerisation oder Emulsionspolymerisation, z. B. von Vinylacetat od. Acrylaten) und Sekundärdispersionen, bei welchen vorgefertigte Polymere in einem zweiten Verfahrensschritt dispergiert werden (z. B. von Polyisobuten, Siliconharzen, Polyurethanen, Polyvinylethern).

Polymerdispersion finden Verwendung in Anstrichstoffen (Dispersions-, Latex-, Binderfarben), im Bauten- und Korrosionsschutz, in der Papier-, Textil- und Teppichbeschichtung, für Latexschaumformteile, als Klebstoffe und dergleichen mehr.

Wegen des oftmals hohen Gehaltes an organischem Material, welches in wäßrigem Milieu vorliegt, bieten Polymerdispersionen einen guten Nährboden für bestimmte Mikroorganismen. Es empfiehlt sich daher, sie durch ein Konservierungsmittel vor dem Befall und Verderb zu schützen.

Konservierungsmittel sind antimikrobielle Substanzen, die beim Herstellungsprozeß einem Produkt (Nahrungs- oder Genußmittel, pharmazeutische, kosmetische oder auch chemisch-technische Zubereitungen) in geringen Mengen (gewöhnlich je nach Produkt zwischen ca. 0,0005 % und 1 % Aktivgehalt) zugesetzt werden. Konservierungsmittel sollen Produkte während der Herstellung, der Lagerung und des Gebrauchs vor Verunreinigungen durch Mikroorganismen insbesondere vor den mikrobiell bedingten nachteiligen Veränderungen schützen.

Die meisten für eine Konservierung vorgeschlagenen bzw. vorgesehenen Konservierungsmittel wirken bakteriostatisch und fungistatisch, gelegentlich auch bakterizid und fungizid: sie sollen geruch- und geschmacklos und in den zur Anwendung kommenden Dosen nach Möglichkeit löslich, nicht toxisch, hautverträglich und ausreichend wirksam sein. Die Konservierungsmittel müssen, um wirksam zu sein, in dem zu konservierenden Roh- oder Hilfsstoff gelöst sein. Da die meisten Konservierungsmittel besser fett- als wasserlöslich sind, muß damit gerechnet werden, daß z. B. in einer Emulsion, deren wäßrige Phase konserviert werden soll, das in die wäßrige Phase eingearbeitete Konservierungsmittel im Verlauf der Lagerung in die Fettphase auswandert und damit die Konservierung der wäßrigen Phase in Frage gestellt ist. Aus diesem Grunde empfiehlt es sich, eine Kombination von Konservierungsmitteln einzusetzen, d. h., die wäßrige Phase mit einem gut wasserlöslichen Konservierungsmittel, die Fettphase dagegen gleichzeitig mit einem fettlöslichen Konservierungsmittel zu konservieren.

Biozide Mittel werden zur Bekämpfung von schädlichen Bakterien, Pilzen, Hefen oder Algen in vielen Bereichen eingesetzt. Bekannte Wirkstoffe, die in bioziden Mitteln häufig eingesetzt werden, sind z.B. 5-Chlor-2-Methylisothiazolin-3-on, 2-Methylisothiazolin-3-on, 2-n-Octyl-isothiazolin-3-on, 4,5-Dichlor-2-n-octylisothiazolin-3-on, 1,2-Benzisothiazolin-3-on und N-Alkyl-1,2-Benzisothiazolin-3-on (Alkyl: $C_1$ - $C_{12}$), bevorzugt N-Butyl-1,2-Benzisothiazolin-3-on. Trotz anerkannt guter mikrobiozider Wirksamkeit ist diese Wirkstoffklasse der 3-Isothiazolinone mit verschiedenen Nachteilen behaftet. So sind z.B. die 3-Isothiazolinone als eindeutig sensibilisierende Substanzen bekannt. Im Sinne des Verbraucherschutzes ist der Einsatz dieser Wirkstoffe deshalb so niedrig wie möglich zu halten.

EP-A-0375367 offenbart biozide synergistische Mischungen aus 2-n-Octyl-4-isothiazolin-3-on und 21 bekannten Bioziden von denen fünf Formaldehyd-Additionsprodukte sind.

Aufgabe der Erfindung war es demnach, mikrobiozide Zusammensetzungen anzugeben, die dadurch verbessert sind, dass ihre Komponenten synergistisch zusammenwirken und deshalb beim gleichzeitigen Einsatz in geringeren Konzentrationen verwendet werden können, verglichen mit den nötigen Konzentrationen im Falle der Einzelkomponenten.

Diese Aufgabe löst die Erfindung durch biozide Wirkstoffkombinationen, umfassend

a) eine wirksame Menge an Tetramethylolacetylendiharnstoff und
b) eine wirksame Menge eines oder mehrerer biozid wirksamer Substanzen, gewählt aus der Gruppe der Isothiazolin-3-one.

Die erfindungsgemäßen Wirkstoffkombinationen zeigen gegenüber den Einzelwirkstoffen deutlich synergistische Wirkung.

Produkte, insbesondere Dispersionen, bevorzugt Polymerdispersionen, mit einem Gehalt an erfindungsgemäßen Wirkstoffkombinationen sind in vorzüglicher Weise vor Befall von Mikroorganismen bzw. Verderb geschützt und stellen ihrerseits vorteilhafte Ausführungsformen der vorliegenden Erfindung dar.

Eine weitere vorteilhafte Ausführungsform der vorliegenden Erfindung ist die Verwendung von Wirkstoffkombinationen aus

a) einer wirksamen Menge an Tetramethylolacetylendiharnstoff und
b) einer wirksamen Menge eines oder mehrerer biozid wirksamer Substanzen, gewählt aus der Gruppe der Isothiazolin-3-one

zum Schutze von Produkten, insbesondere Dispersionen, vor Befall von Mikroorganismen bzw. Verderb.

Tetramethylolacetylendiharnstoff (eigentlich: Tetrahydro-1,3,4,6-tetrakis(hydroxymethyl)-imidazo(4,5-d)imidazol-2,5(1H,3H)-dion, CAS-Nr.: 5395-50-6) ist durch die chemische Struktur

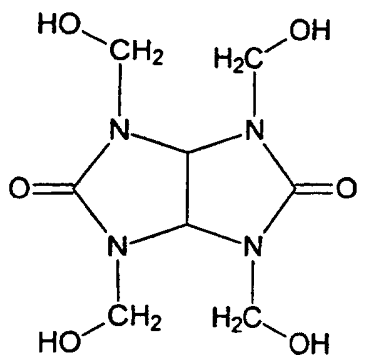

gekennzeichnet.

Es ist bevorzugt, das oder die Isothiazolin-3-one aus der Gruppe

5-Chlor-2-Methylisothiazolin-3-on

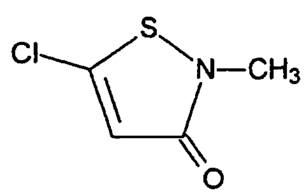

2-Methylisothiazolin-3-on,

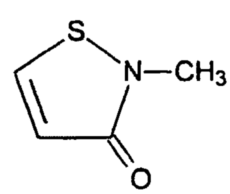

4,5-Dichlor-2-n-octylisothiazolin-3-on

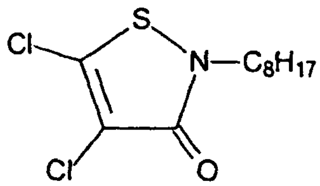

1,2-Benzisothiazolin-3-on

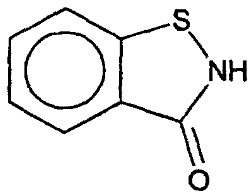

N-Alkyl-1,2-Benzisothiazolin-3-on

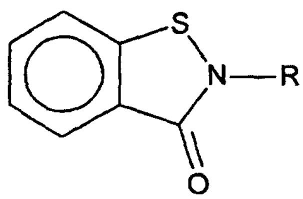

zu wählen.

In erfindungsgemäß vorteilhaften N-Alkyl-1,2-Benzisothiazolin-3-onen bedeutet R = $C_1$-$C_{12}$-Alkyl. Von diesen bevorzugt ist das N-Butyl-1,2-Benzisothiazolin-3-on,

Vorteilhaft können die Gewichtsverhältnisse von a) zu b) aus dem Bereich von 1000 : 1 bis 1 : 10 gewählt werden, bevorzugt 100 : 1 bis 1 : 1, insbesondere bevorzugt 50 : 1 bis 5 : 1.

Vorteilhaft kann die Konzentration der erfindungsgemäßen Wirkstoffkombinationen in den vor Befall bzw. Verderb zu schützenden Produkten, insbesondere Dispersionen, aus dem Bereich von 0,0001 bis 5,0 Gew.-%, bevorzugt 0,01 bis 1,0 Gew.-%, insbesondere bevorzugt 0,05 - 0,5 Gew.-% gewählt werden, bezogen auf das Gesamtgewicht des zu schützenden Produktes.

Es ist zweckmäßig, wenngleich nicht zwingend, die Biozide der erfindungsgemäßen Zusammensetzung in Kombination mit einem polaren oder unpolaren flüssigen Medium einzusetzen. Dabei kann dieses Medium beispielsweise in der Biozidzusammensetzung und/oder in dem zu konservierenden Stoff vorgegeben sein.

Bevorzugte polare flüssige Medien sind Wasser, ein aliphathischer Alkohol mit 1 bis 4 Kohlenstoffatomen, z. B. Ethanol und Isopropanol, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z:B. Butyldiglykolacetat oder 2,2,4-Trimethylpentandiol-monoisobutyrat, ein Polyethylenglykol, ein Polypropylenglykol, N,N-Dimethylformamid oder ein Gemisch aus solchen Stoffen. Das polare flüssige Medium ist insbesondere Wasser.

Die Wirkstoffe können in gelöster Form und/oder in feindisperser Form in den erfindungsgemäßen Biozidzusammensetzungen vorliegen.

Als unpolare flüssige Medien dienen z.B. Aromaten, vorzugsweise Xylol und Toluol.

Zubereitungen, insbesondere Dispersionen, welche erfindungsgemäße Wirkstoffkombinationen enthalten, sind ebenfalls vorteilhafte Ausführungsformen der vorliegenden Erfindung.

Sie können zusätzlich noch einen oder mehrere, weitere biozide Wirkstoffe enthalten, die in Abhängigkeit vom Anwendungsgebiet ausgewählt werden. Spezielle Beispiele für solche zusätzlichen bioziden Wirkstoffe sind nachfolgend angegeben:

Benzylalkohol, 2,4-Dichlorbenzylalkohol, 2-Phenoxyethanol, Phenoxypropanole, Phenylethylalkohol, 5-Brom-5-nitro-1,3-dioxan, Formaldehyd und Formaldehyd-Depotstoffe, Dimethyloldimethylhydantoin, Glyoxal, Glutardialdehyd, Sorbinsäure, Benzoesäure, Salicylsäure, p-Hydroxybenzoesäureester, Chloracetamid, Phenole, wie

p-Chlor-m-kresol und o-Phenylphenol, N-Methylolharnstoff, N,N'-Dimethylharnstoff, Benzylalkoholhemiformal, 4,4-Dimethyl-1,3-oxazolidin, 3,3'-Methylen-bis-(5-methyloxazolidine), 1,3,5-Hexahydrotriazinderivate, Quaternäre Ammoniumverbindungen, wie z.B. N-Alkyl-N,N-dimethylbenzylammoniumchlorid und Di-n-decyldimethylammoniumchlorid, Cetylpyridiniumchlorid, Diguanidin, Polybiguanid, 1,2-Dibrom-2,4-dicyanobutan, Ethylenglykolhemiformal, Tetra(hydroxymethyl)-phosphoniumsalze, 2,2-Dibrom-3-nitrilopropionsäureamid, 3-lod-2-propinyl-N-butylcarbamat, N-Cyclohexyl-2-amino-benzthiophen-S,S-dioxid, N-Aryl-N',N',-dialkylharnstoffderivate wie z.B. Diuron oder Isoproturon, Carbendazim, Benomyl, Thiabendazol, 4,5-Trimethylen-2-methylisothiazolin-3-on, 2,2'-Dithio-dibenzoesäure-di-N-methylamid, chlorfreie Triazinderivate aus der Reihe der -Methylmercapto-dialkylamino-sym-triazine wie z.B. Terbutryn oder Irgarol 1051, 2-Thiocyanomethylthiobenzthiazol, 2-Hydroxymethyl-2-nitro-1,3-propandiol, 2-Brom-2-nitropropan-1,3-diol, N,N-Bis(3-aminopropyl)dodecylamin, N,N-Bis(3-aminopropyl)-octylamin Methylenbisthiocyanat, Zink-Pyridinthion.

Als solche weiteren bioziden Wirkstoffe sind 3-lod-2-propinyl-N-butylcarbamat, Formaldehyd oder ein Formaldehyd-Depotstoff sowie 2-Brom-2-nitropropan-1,3-diol bevorzugt.

Beispiele für den Formaldehyd-Depotstoff sind

N-Formale, wie z.B. N,N'-Dimethylolharnstoff, N-Methylolharnstoff, Dimethyloldimethylhydantoin.

O-formale, wie z.B. Ethylenglykolhemiformal, Propylenglykolhemiformal, Butyldiglykolhemiformal, Benzylalkoholhemiformal.

Die erfindungsgemäße Biozidzusammensetzung kann daneben noch andere übliche Bestandteile enthalten, die dem Fachmann auf dem Gebiet der Biozide als Zusatzstoffe bekannt sind: Es sind dies z.B. Verdickungsmittel, Entschäumer, Stoffe zur Einstellung des pH-Werts, Duftstoffe, Dispergierhilfsmittel und färbende Stoffe.

Die erfindungsgemäße Biozidzusammensetzung kann auf sehr unterschiedliche Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

Bei der praktischen Anwendung kann die Biozidzusammensetzung entweder als fertiges Gemisch oder durch getrennte Zugabe der Biozide und der übrigen Komponenten der Zusammensetzung in den zu konservierenden Stoff eingebracht werden.

Die erfindungsgemäßen Biozidzusammensetzungen basieren auf synergistischen Wirkstoffkombinationen von Tetramethylolacetylendiharnstoff und einem Vertreter aus der Gruppe der Isothiazolin-3-one. Im allgemeinen wird von Synergie geredet, wenn die Wirksamkeit einer Mischung von zwei oder mehreren Komponenten größer ist, als die Summe der Wirksamkeit der einzelnen Komponenten.

Eine Bewertung der Synergie erfolgt nach der Methode von F.C. Kull et al, *Applied Microbiology,* **9**: 538 (1961):

$$\text{Synergie Index (SI)} = Q_a/Q_A + Q_bQ_B,$$

wobei

- $Q_a$ = Konzentration von Komponente A im Biozidgemisch mit dem gewünschten Effekt (z.B. kein Wachstum der Mikroorganismen),
- $Q_A$ = Konzentration von Komponente A als einziges Biozid mit dem gewünschten Effekt,
- $Q_b$ = Konzentration von Komponente B im Biozidgemisch mit dem gewünschten Effekt, und
- $Q_B$ = Konzentration von Komponente B als einziges Biozid mit dem gewünschten Effekt.

Eine Synergie der beiden bioziden Wirkstoffen besteht nun, wenn der Synergie Index (SI) einen Wert von unter 1 (< 1) zeigt.

Beispiel 1:

Mit diesem Beispiel wird der Synergismus von Kombinationen aus Tetramethylolacetylendihamstoff (TD) und einem Gemisch von 5-Chloro-2-Methylisothiazolin-3-on mit 2 Methylisothiazolin-3-on - im Verhältnis 3:1 - (CMI/MI) in der erfindungsgemäßen Biozidzusammensetzung aufgezeigt. Es wurden hierzu die einzelnen bioziden Wirkstoffe als auch Kombinationen dieser Wirkstoffe in eine handelsüblichen Wandfarbe eingearbeitet und anschließend die Wirkung dieser Gemische auf Mikroorganismen (*Pseudomonas aeruginosa, Staphylococcus aureus, Escherichia coli*) geprüft. Die Ergebnisse dieser Prüfung sind in Tabelle 1 aufgelistet.

Tabelle 1:

| Wirkstoff | **Minimale Wirkstoffkonzentration (ppm), bei der noch Wirkung gegen Mikroorganismen auftritt** | **Synergie Index (SI)** |
|---|---|---|
| TD | 250 | -- |
| CMI/MI | 18 | -- |
| TD+CMI/MI | 125 + 5 | 0,78 |

Beispiel 2

Mit diesem Beispiel wird der Synergismus von Kombinationen aus Tetramethylolacetylendiharnstoff (TD) und 2-Methylisothiazolin-3-on (MI) in der erfindungsgemäßen Biozidzusammensetzung aufgezeigt. Es wurden hierzu die einzelnen bioziden Wirkstoffe als auch Kombinationen dieser Wirkstoffe in einer handelsüblichen Wandfarbe eingearbeitet und anschließend die Wirkung dieser Gemische auf Mikroorganismen (*Pseudomonas aeruginosa, Staphylococcus aureus, Escherichia coli*) geprüft. Die Ergebnisse dieser Prüfung sind in Tabelle 2 aufgelistet.

Tabelle 2:

| Wirkstoff | **Minimale Wirkstoffkonzentration (ppm), bei der noch Wirkung gegen Mikroorganismen auftritt** | **Synergie Index (SI)** |
|---|---|---|
| TD | 250 | -- |
| MI | 200 | -- |
| TD + MI | 125 + 30 | 0,65 |

Beispiel 3:

Mit diesem Beispiel wird der Synergismus von Kombinationen aus Tetramethylolacetylendiharnstoff (TD) und 1,2-Benzisothiazolin-3-on (BIT) in der erfindungsgemäßen Biozidzusammensetzung aufgezeigt. Es wurden hierzu die einzelnen bioziden Wirkstoffe als auch Kombinationen dieser Wirkstoffe in einer handelsüblichen Wandfarbe eingearbeitet und anschließend die Wirkung dieser Gemische auf Mikroorganismen *(Pseudomonas aeruginosa, Staphylococcus aureus, Escherichia coli*) geprüft. Die Ergebnisse dieser Prüfung sind in Tabelle 3 aufgelistet.

Tabelle 3:

| **Wirkstoff** | **Minimale Wirkstoffkonzentration (ppm), bei der noch Wirkung gegen Mikroorganismen auftritt** | **Synergie Index (SI)** |
|---|---|---|
| TD | 250 | -- |
| BIT | 200 | -- |
| TD + BIT | 125 + 30 | 0,65 |

**Patentansprüche**

**1.** Biozide Wirkstoffkombinationen, umfassend

a) eine wirksame Menge an Tetramethylolacetylendiharnstoff und
b) eine wirksame Menge an einer biozid wirksamen Substanz, gewählt aus der Gruppe 4,5-Dichlor-2-n-octylisothiazolin-3-on, 1,2-Benzisothiazolin-3-on und der N-($C_1$-$C_{12}$)-Alkyl-1,2-Benzisothiazolin-3-one.

**2.** Verwendung von Wirkstoffkombinationen aus

a) einer wirksamen Menge an Tetramethylolacetylendihamstoff und
b) eine wirksame Menge an einer biozid wirksamen Substanz, gewählt aus der Gruppe 4,5-Dichlor-2-n-octylisothiazolin-3-on, 1,2-Benzisothiazolin-3-on und der N-($C_1$-$C_{12}$)-Alkyl-1,2-Benzisothiazolin-3-one

zum Schutze von Produkten, insbesondere Dispersionen, vor Befall von Mikroorganismen bzw. Verderb.

3. Wirkstoffkombinationen oder Verwendung nach Anspruch 1 oder 2, **dadurch gekennzeichnet, daß** als N-($C_1$-$C_{12}$)-Alkyl-1,2-Benzisothiazolin-3-on das N-Butyl-1,2-Benzisothiazolin-3-on, gewählt wird.

4. Wirkstoffkombinationen nach Anspruch 1 oder Verwendung nach Anspruch 2, **dadurch gekennzeichnet, daß** die Gewichtsverhältnisse von a) zur b) aus dem Bereich von 1000 : 1 bis 1 : 10 gewählt werden, bevorzugt 100 : 1 bis 1 : 1, insbesondere bevorzugt 50 : 1 bis 5 : 1.

5. Wirkstoffkombinationen nach Anspruch 1 oder Verwendung nach Anspruch 2, **dadurch gekennzeichnet, daß** die Konzentration der Wirkstoffkombinationen in den vor Befall bzw. Verderb zu schützenden Produkten, insbesondere Dispersionen bevorzugt Polymerdispersionen, aus dem Bereich von 0,0001 bis 5,0 Gew.-%, bevorzugt 0,01 bis 1,0 Gew.-%, insbesondere bevorzugt 0,05 - 0,5 Gew.-% gewählt werden, bezogen auf das Gesamtgewicht des zu schützenden Produktes.

## Claims

1. Biocidal active ingredient combinations comprising

   a) an effective amount of tetramethylolacetylenediurea and
   b) an effective amount of a biocidally effective substance chosen from the group consisting of 4,5-dichloro-2-n-octylisothiazolin-3-one, 1,2-benzisothiazolin-3-one and N-($C_1$-$C_{12}$)-alkyl-1,2-benzisothiazolin-3-ones.

2. Use of active ingredient combinations of

   a) an effective amount of tetramethylolacetylenediurea and
   b) an effective amount of a biocidally effective substance chosen from the group consisting of 4,5-dichloro-2-n-octylisothiazolin-3-one, 1,2-benzisothiazolin-3-one and N-($C_1$-$C_{12}$)-alkyl-1,2-benzisothiazolin-3-ones

   to protect products, in particular dispersions, against attack by microorganisms and/or spoilage.

3. Active ingredient combinations or use according to Claim 1 or 2, **characterized in that** N-butyl-1,2-benzisothiazolin-3-one is chosen as N-($C_1$-$C_{12}$)-alkyl-1,2-benzisothiazolin-3-one.

4. Active ingredient combinations according to Claim 1 or use according to Claim 2, **characterized in that** the weight ratios of a) to b) are chosen from the range from 1000:1 to 1:10, preferably 100:1 to 1:1, particularly preferably 50:1 to 5:1.

5. Active ingredient combinations according to Claim 1 or use according to Claim 2, **characterized in that** the concentration of the active ingredient combinations in the products to be protected against attack or spoilage, in particular dispersions, preferably polymer dispersions, is chosen from the range from 0.0001 to 5.0% by weight, preferably 0.01 to 1.0% by weight, particularly preferably 0.05-0.5% by weight, based on the total weight of the product to be protected.

## Revendications

1. Combinaisons de substances actives biocides qui comprennent:

   a) une quantité efficace de tétraméthylolacétylène-diurée et
   b) une quantité efficace d'une substance à action biocide qui est sélectionnée dans le groupe constitué de la 4,5-dichloro-2-n-octylisothiazolin-3-one, de la 1,2-benzothiazolin-3-one et des N-(alkyle en $C_1$-$C_{12}$)-1,2-benzothiazolin-3-ones.

2. Utilisation de combinaisons de substances actives constituées de:

   a) une quantité efficace de tétraméthylolacétylène-diurée et

b) une quantité efficace d'une substance à action biocide qui est sélectionnée dans le groupe constitué de la 4,5-dichloro-2-n-octylisothiazolin-3-one, de la 1,2-benzothiazolin-3-one et des N-(alkyle en $C_1$-$C_{12}$)-1,2-benzothiazolin-3-ones

pour la protection de produits et en particulier de dispersions contre l'attaque ou la détérioration par des microorganismes.

**3.** Combinaisons de substances actives ou leur utilisation selon la revendication 1 ou 2, **caractérisées en ce que** comme N-(alkyle en $C_1$-$C_{12}$)-1,2-benzothiazolin-3-one, on sélectionne la N-butyl-1,2-benzothiazolin-3-one.

**4.** Combinaisons de substances actives selon la revendication 1 ou utilisation selon la revendication 2, **caractérisées en ce que** le rapport pondéral entre a) et b) est sélectionné à des valeurs comprises entre 1000:1 et 1:10, de préférence entre 100:1 et 1:1 et de manière particulièrement préférée entre 50:1 et 5:1.

**5.** Combinaisons de substances actives selon la revendication 1 ou utilisation selon la revendication 2, **caractérisées en ce que** la concentration des combinaisons de substances actives dans les produits, en particulier les dispersions et de préférence les dispersions polymères, qui doivent être protégés de l'attaque ou de la détérioration est sélectionnée dans la plage de 0,0001 à 5,0 % en poids, de préférence de 0,01 à 1,0 % en poids et de manière particulièrement préférée entre 0,05 et 0,5 % en poids par rapport au poids total du produit à protéger.